# EUROPEAN PATENT SPECIFICATION

(11) **EP 4 586 627 B1**
(45) Date of publication and mention of the grant of the patent: **14.10.2026**
(21) Application number: 24151052.8
(22) Date of filing: 09.01.2024
(51) Int. Cl.: H04N 21/643, H04L 1/22

(54) **MEDIA DATA PROCESSING DEVICE AND METHOD FOR SWITCHING BETWEEN MEDIA DATA STREAMS**
MEDIENDATENVERARBEITUNGSVORRICHTUNG UND VERFAHREN ZUM UMSCHALTEN ZWISCHEN MEDIENDATENSTRÖMEN
DISPOSITIF DE TRAITEMENT DE DONNÉES MULTIMÉDIA ET PROCÉDÉ DE COMMUTATION ENTRE DES FLUX DE DONNÉES MULTIMÉDIA

(43) Date of publication of application: 16.07.2025
(73) Proprietor: EVS Broadcast Equipment SA, 4102 Seraing (BE)
(72) Inventor: de Groot, Jan-Willem, 5061 LB Oisterwijk (NL)
(74) Representative: Rossmanith, Manfred

(56) References cited:
- US-A1- 2023 276 107
- BI JIANG ET AL: "8K Ultra HD TV broadcast system: challenge, architecture and implementation", DIGITAL COMMUNICATIONS AND NETWORKS, 1 June 2023 (2023-06-01), XP093173283, DOI: 10.1016/j.dcan.2023.06.001
- SMPTE: "Seamless Protection Switching of SMPTE ST 2022 IP Datagrams", 11 October 2013 (2013-10-11), pages 1 - 13, XP055421428, Retrieved from the Internet <URL:http://ieeexplore.ieee.org/stampPDF/getPDF.jsp?tp=&arnumber=7291851> [retrieved on 20171102]

## Description

### Field

The present disclosure relates to a media data processing device for selectively processing one of at least two different media data streams which are referred to also as content streams. In particular, the present disclosure also relates to a method for switching between media data streams. The method can be implemented by a processing device according to the present disclosure.

### Background

In video productions, such as sports events, video contributions usually come from more than one physical location. Cameras shooting the event typically are outside of a studio, for instance in a sports stadium. The camera signals are transferred to a video production server. In addition to that, there may be experts and a moderator in the studio discussing the sports event. Their discussion is covered by additional cameras generating further camera streams that are fed into the production server. A production director controls the video production by selecting camera streams, making cuts, and choosing video effects. Additional staff members of the production team may be involved for editing of the program stream, performing video effects etc. The finalized program stream is provided by a playout system.

EP 2 870 749 B1 describes a distributed video production and playout system in which processing devices are either located in a data center or distributed among various remote locations for performing different tasks required for the video production and playout systems. The video and audio data are exchanged between the processing devices by data links transmitting the data as IP packets in an IP network. If the network connecting the processing devices involved in a video production fails, then the production output signal is affected or gets lost entirely. Obviously, this is a worst-case scenario that must be avoided, especially for big and expensive sports events, for example a football world championship. One practical approach to avoid such a worst-case scenario is to transport the video signals redundantly across two independent redundant networks providing data according to the SMPTE 2022-7 standard. In this case the streams are also referred to as "-7 compliant streams".

Even when two independent and redundant networks are in operation, failure of a processing device can interrupt a broadcast production. EP 4 228 271 A1 addresses this problem and proposes a media data transmission and processing system comprising processing devices with two processing units that can replace each other and still output - 7 compliant streams. In this way it is possible to guarantee an uninterrupted broadcast production even when one of the redundant networks or one of redundant processing units in a processing device fails.

US 2023/276107 A1 describes a resilient media transmission/processing architecture for SMPTE 2022-7 "RED/BLUE" redundant IP streams that removes the processing unit as a single point of failure. It uses two independent processing cards with cross-connections plus a master-slave interconnect to align new PTP timestamps/sequence numbers, enabling seamless packet replacement via baseband probing and continued downstream output if one card fails.

And BI JIANG ET AL: "8K Ultra HD TV broadcast system: challenge, architecture and implementation", DIGITAL COMMUNICATIONS AND NETWORKS, 1 June 2023, discloses an 8K UHD TV broadcast system that avoids additional bandwidth during content stream switching by replacing uncompressed SMPTE IP workflows with an all-IP architecture based on JPEG-XS shallow compression over SMPTE ST 2110-22, with ST 2022-7 protection. By supporting multi-format file playout and parallel PGM/PST decoding with pre-started decoders and buffered outputs, the system enables seamless sub-20 ms switching while maintaining constant per-stream bandwidth, eliminating the need for duplicated uncompressed 8K paths during transitions.

The advantage of increased reliability for broadcast production when using - 7 compliant networks and processing devices comes along with an increased bandwidth requirement when a processing device switches between content streams provided by different video sources.

In view of the increased need of bandwidth during switching of existing broadcast production systems and processing devices there remains a desire for a processing device to overcome or at least improve the problem of an increased bandwidth requirement when switching between different video sources as mentioned at the outset.

### Summary

According to a first aspect the present disclosure suggests a method for switching between different content streams to be ingested, processed, and delivered as output stream by the media data processing device. Each content stream is a - 7 compliant content stream comprising two identical video streams as main and backup video streams with identical IP packets. The method comprises
- discontinuing transmission of one of the main and backup video streams of a currently ingested first content stream,
- enabling transmission of one of the main and backup video streams of a second content stream,
- switching from the currently ingested first content stream to the second content stream for processing,
- discontinuing transmission of the other one of the main and backup video streams of the first content stream, and
- enabling transmission of the other one of the main and backup video streams of the second video stream.

The main advantage of the method is that no additional bandwidth is required when switching at the expense of a short period of time during which - 7 compliance is not maintained. However, it is very unlikely that in practical use cases the short period of non - 7 compliance presents a considerable risk.

In an embodiment the switching from the currently ingested first content stream to the second content stream for processing is executed upon reception of the next IP packet of the second content stream. Switching at a frame boundary is most convenient because for the viewer of a program no visible disturbance will be created by the switching.

In a useful embodiment the backup video stream is discontinued prior to discontinuing the main video stream of the first content stream. In another embodiment an opposite sequence is implemented.

In a practical embodiment the backup video stream is enabled prior to enabling the main video stream of the second content stream. In other use cases an opposite sequence can be implemented.

Most advantageously, the output stream is delivered as a - 7 compliant content stream to assure a reliable production that is resilient to technical issues in the production equipment or network problems.

According to a second aspect the present disclosure suggests a media data processing device for switching between different content streams to be ingested, processed, and delivered as output stream. Each content stream is a - 7 compliant content stream comprising two identical video streams as main and backup video streams with identical IP packets. The media data processing device is configured to
- discontinue transmission of one of the main and backup video streams of a currently ingested first content stream,
- enable transmission of one of the main and backup video streams of a second content stream,
- switch from the currently ingested first content stream to the second content stream for processing,
- discontinue transmission of the other one of the main and backup video streams of the first content stream, and
- enable transmission of the other one of the main and backup video streams of the second video stream.

The processing device is apt for realizing the same advantages as the method according to the first aspect of the present disclosure.

According to a third aspect the present disclosure suggests a broadcast production system comprising one or several media data processing devices according to the second aspect of the present disclosure.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a schematic block diagram of a processing device according to the present disclosure;
- Fig. 2: a schematic diagram illustrating conventional switching between content streams;
- Fig.3: a schematic diagram illustrating switching between content streams according to the present disclosure; and
- Fig. 4: an alternative schematic diagram illustrating switching between content streams according to the present disclosure.

The same or similar elements in the figures are labeled with the same or similar reference signs. The flow of data streams is the symbolized in the figures by arrows.

In the following the terms "IP packet" and "data packet" are used synonymously. The same applies to "media content" and a "media data".

### Detailed description

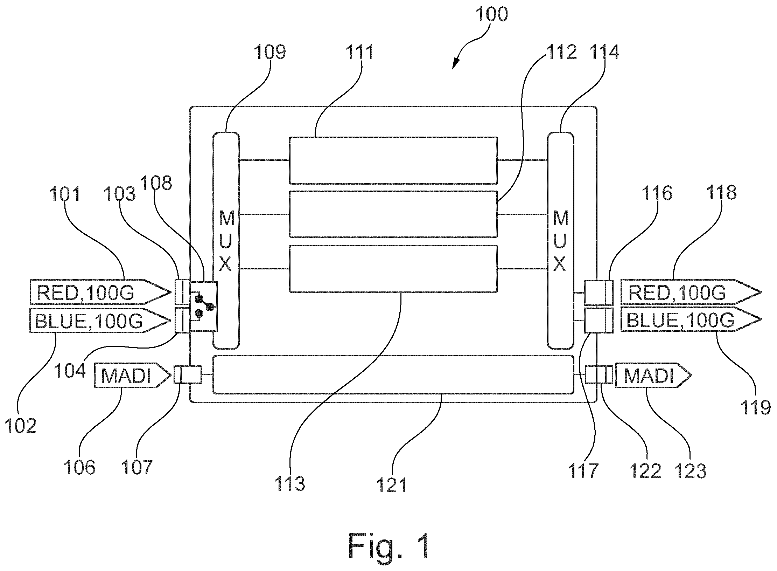

Figure 1 exhibits a schematic block diagram of a - 7 compliant processing device 100 according to the present disclosure. The processing device 100 receives media content data as IP packets via two redundant networks 101, 102 for instance according to a real-time transport protocol (RTP). If an active network currently used in the video production fails, then the processing device can switch to the redundant backup network. In the broadcast industry the active network is frequently called the RED network and the backup network the BLUE network. This concept is specified in the SMPTE 2022-7 standard, which describes how a processing device can switch between the two networks to select the "better packet", that is a packet without errors, from the two networks or to switch over completely to the redundant backup network if the data on the main network has many errors or the main network has failed completely. In theory the processing device can provide a valid output stream if both networks have a lot of errors as long as there is one valid packet in each stream that can be selected by the processing device. Each data packet has a media content as payload, a PTP timestamp and a packet counter value. The SMPTE 2022-7 stipulates that the packets on both networks need to have exactly the same PTP timestamp and exactly the same packet counter value, which enables the processing device to identify the correct packet in the backup network if a packet in the currently active network has been detected by a packet selector to be defective and needs to be replaced. Since the media content in these two packets is the same, the replacement is seamless in the output production stream and invisible for a user.

In the following, data streams that are compliant with the SMPTE 2022-7 standard will be named briefly as "- 7 compliant data streams". Similarly, a device that is capable of replacing a defective packet in one of two redundant networks (RED and BLUE network) by the same packet in the other network, is labeled as "SMPTE 2022-7 compliant device" or briefly as "- 7 compliant device". Likewise, the RED and BLUE networks are called SMPTE 2022-7 compliant networks or briefly "- 7 compliant networks". It is noted that systems that use the SMPTE 2110 suite of standards also use the - 7 type of resilience. Therefore, such systems are also - 7 compliant in the sense as explained above and are suitable for implementing the present disclosure.

It is noted that the networks transmit several media streams at the same time. In the embodiment shown in Figure 1 for instance 24 media streams are transmitted via 100 G ethernet networks 101, 102 which are connected at inputs 103, 104 of the processing device 100. The bandwidth of the networks is sufficient to carry 24 UHD video streams and up to 512 associated audio streams. The audio streams are transmitted via a MADI link 106 and are received at input 107.

As mentioned above, in the interest of a failsafe production, the media data are provided redundantly over the networks 101, 102 also labeled as RED and BLUE networks. During normal operation in the absence of disturbances, the processing device 100 processes the media data received from the RED network 101. A packet selector 108 verifies that the received data packets are error-free. If errors or missing packets are detected, the packet selector 108 switches to the BLUE network 102 that provides the same data packet. The received data packets pass through an input multiplexer 109 that distributes the incoming data streams to three processors 111-113 processing the received data streams and outputting the processed data to an output multiplexer 114. The output multiplexer 114 transfers the processed data to two outputs 116, 117 at the same time. The output 116 is connected with a network 118 and the output 117 is connected with a network 119. The networks 118, 119 are again - 7 compliant and are labeled as RED and BLUE networks.

The audio data received at input 107 are processed in an audio processor 121, which provides a processed audio data to an output 122 which is connected with a MADI link 123. The MADI links 106, 123 are described only for the sake of completeness and have no bearing on the core of the present disclosure.

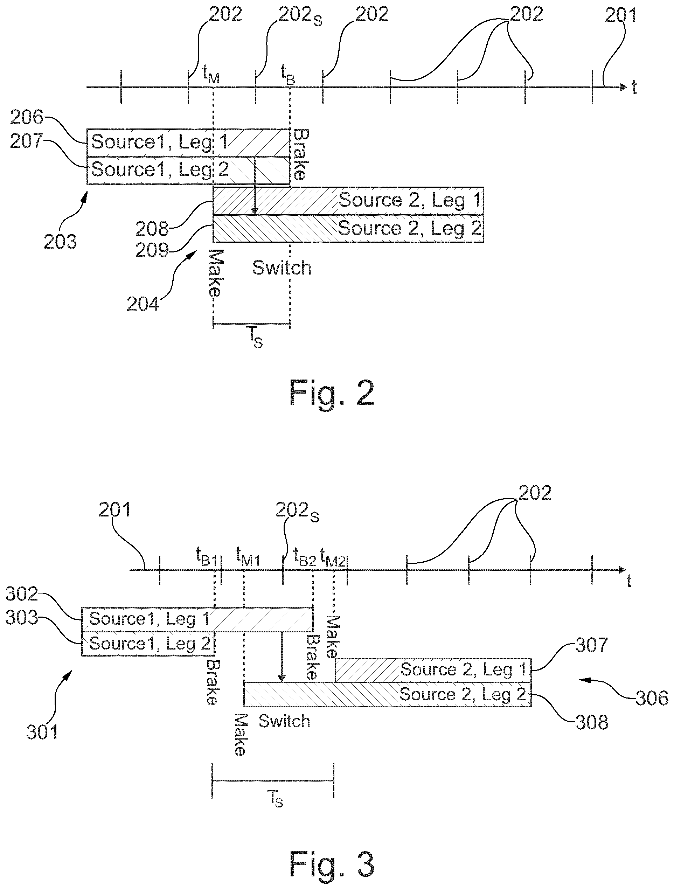

During a broadcast production it is frequently necessary to switch from one video stream provided by a first video source (video source 1) such as a camera or a replay device, to another video stream provided by a second video source (video source 2). Conventionally, switching between video sources 1 and 2 is performed according to a method labeled as "Make - Before - Break", which is illustrated in Figure 2.

Figure 2 displays a timeline 201 with vertical lines 202 indicating frame boundaries of an incoming video stream. The incoming first video stream received from video source 1 is shown as a horizontal bar 203 and the incoming second video stream received from video source 2 is shown as a horizontal bar 204. As it has been mentioned above, the incoming video stream from video source 1 is transmitted via the RED and BLUE networks 101, 102. Therefore, the horizontal bar 203 is divided into two half bars 206, 207 labeled as "Leg 1" and "Leg 2". Specifically, video stream 1 transmitted via the RED network 101 is symbolized as Leg 1, and video stream 1 transmitted via the BLUE network 102 is symbolized as Leg 2.

Similar to the first video stream, the second video stream from video source 2 is also transmitted simultaneously via the RED and BLUE networks 101, 102. Thus, the horizontal bar 204 is divided into two half bars 208, 209 labeled as "Leg 1" and "Leg 2". Specifically, the second video stream transmitted via the RED network 101 is symbolized as Leg 1, and the second video stream transmitted via the BLUE network 102 is the symbolized as the Leg 2.

In order to prepare a switch between video source 1 and video source 2, the transmission of the second video stream from video source 2 is enabled at point in time t_{M} ("time t_{M}") representing the "Make" according to the conventional switching method. Once the next frame boundary after time t_{M} arrives in the first video stream, a switch to the second video stream 204 is executed. Subsequently, the transmission of the first video stream is stopped at point in time t_{B} ("time t_{B}") corresponding to the "Break" according to the conventional method. In other words: The transmission of the first video stream 203 is stopped only after the transmission of the second video stream 204 has been enabled and validated. As can be seen in Figure 2, the required bandwidth during a switching interval Ts extending between time t_{M} and time t_{B} is twice as big as compared to before and after the switching, i.e. before time t_{M} and after time t_{B}, because during the switching interval Ts two versions (namely Leg 1 and Leg 2) of the first and the second video stream are transmitted. Before time t_{M} and after time t_{B} only either the first or second video stream is transmitted but not both. The additional bandwidth requirement can present a problem in complex productions occupying a big portion of the available bandwidth. If the video production utilizes most of the available bandwidth the additionally required bandwidth for switching may exceed the available bandwidth and therefore imposes undesirable restrictions on the creative work of the operator. The switching from video source 2 to video source 1 is performed in a corresponding manner.

In order to avoid the potentially problematic need for additional bandwidth during switching, the present disclosure suggests a different approach for switching between different video sources. This different approach is illustrated in Figure 3.

In Figure 3 the first video stream from video source 1 is symbolized by a horizontal bar 301 divided into two half bars 302, 303 labeled Leg 1 and a Leg 2. Similar to Figure 2, the first video stream transmitted via the RED network 101 is symbolized as Leg 1, and the first video stream transmitted via the BLUE network 102 is symbolized as Leg 2. Likewise, the second video stream from video source 2 is symbolized by a horizontal bar 306 divided into two half bars 307, 308 labeled Leg 1 and a Leg 2. The second video stream transmitted via the RED network 101 is symbolized as Leg 1, and the first video stream transmitted via the BLUE network 102 is symbolized as Leg 2.

In order to switch from video source 1 to video source 2 the transmission of the first video stream via the BLUE network 102 is stopped at time t_{B1} ("Break"). Therefore, half bar 303 representing the Leg 2 of the first video stream ends at time t_{B1}. With a delay that is most of the times less than one data frame duration the transmission of second video stream via the BLUE network 102 is enabled and validated at time t_{M1} ("Make"). After time t_{M1} Leg 1 of the first video stream and Leg 2 of the second video stream are transmitted and available for device 100. At the next frame boundary 202s after time t_{M1} the processing device 100 switches from the first video stream 301 to the second video stream 306 by switching the packet selector 108 from the RED network 101 to BLUE network 102 (Figure 1). Following the switching at the frame boundary 202s, the transmission of the first video stream via the RED network 101 is stopped at time t_{B2}. With a further delay that is most of the times less than one data frame the transmission of the second video stream via the RED network 101 is enabled and validated at time t_{M2}. The duration of the switching interval Ts extends from time t_{B1} to time t_{M2}. During the switching interval Ts the first and second video streams 301, 306 are not - 7 compliant because only one version of the first and second video stream (namely Leg 1 of the first video stream and Leg 2 of the second video stream) are transmitted to the processing device 100. However, the switching interval Ts lasts only approximately a time interval corresponding to the duration of two data frames. Therefore, the risk of being not - 7 compliant during this short time interval seems to be acceptable in most application cases.

Figure 3 illustrates the following features of the proposed approach for switching between two different video sources providing - 7 compliant media streams:
- The processing device 100 always receives only two video streams, namely either two versions of the first or second video streams or one version of the first and one version of the second video stream.
- The switching between the first and second video stream is performed stepwise by switching one of two versions of the first video streams after the other one of the same video stream.
- During switching no additional bandwidth is required.
- During switching the first and second video streams are not - 7 compliant.

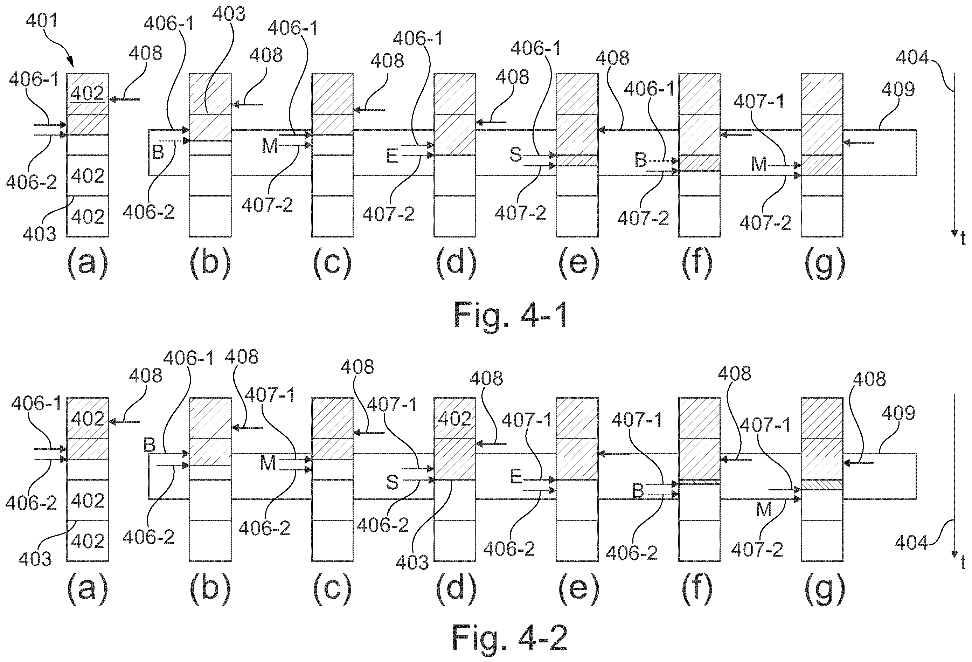

Figures 4.1 and 4.2 display another schematic diagram illustrating the switching between two video streams according to the present disclosure. A column 401 symbolizes a sequence of video frames 402, wherein lines 403 indicate frame boundaries. The most recent video frame 402 is shown on the bottom of the column 401 and the oldest video frame can be found on the top of the column 401. The evolution of time is also illustrated by timelines 404.

Write pointers for the main and backup versions of the first and second video streams are shown as arrows 406 and 407, respectively. The following nomenclature is used to denominate the different write pointers. Write pointers 406 - m (407 - m) refers to the first (second) video stream, wherein m = 1 indicates the main version (Leg 1) and m = 2 the backup version (Leg 2) of the respective video stream. One version of the video streams is written for instance into a buffer. With a delay of approximately one video frame duration the video frames are read out from the buffer as indicated by Read pointer 408. Video frames 402 written into the buffer are hatched and video frames 402, which are not yet written into the buffer are shown as empty rectangles.

In Figure 4.1(a) write pointers 406 - 1, 406 - 2 indicate that the main and backup version of the first video stream are available, and the main version of the first video stream is written into the buffer. In Figure 4.1(b) the backup version of the first video stream is stopped ("break" (B), write pointer 406 - 2). Then, the backup version of the second video stream is made available (write pointer 407 - 2, "make" (M), Figure 4.1(c)) and enabled when the next frame boundary 403 arrives ("enable" (E), write pointer 407 - 2, Figure 4.1(d)). At this moment the switch between the first and the second video stream takes place, and the second video stream is written into the buffer. Since the main version of the first video stream is no longer needed, it is stopped ("stop" (S), 406 - 1, Figure 4.1(e)). Then, the transmission of the main version of the first video stream is broken ("break" (B), write pointer 406 - 1, Figure 4.1(f)) to free bandwidth for making the main version of the second video stream available ("make" (M), write pointer 407 - 1, Figure 4.1(g)). Between the situation shown in Figure 4.1(b) and Figure 4.1(g) the transmission of the first and second video streams is not - 7 compliant because during this time period only one version of the video streams is available contrary to the requirements of SMPTE 2022-7 standard. The non-- 7 compliant period or zone is illustrated in Figure 4.1 by a horizontal box 409. It is noted that in the example illustrated in Figure 4.1 the backup version of the first video stream is broken prior to the main version of the first video stream.

Figure 4.2 shows an example in which the main version of the first video stream is broken first to demonstrate that this does not bring about a different duration of the non-- 7 compliant period.

In Figure 4.2(a) write pointers 406 - 1, 406 - 2 indicate that the main and backup version of the first video stream are available, and the main version of the first video stream is written into the buffer. In Figure 4.2(b) the main version of the first video stream is terminated ("break" (B), write pointer 406 - 1). Then, the main version of the second video stream is initialized ("make" (M), write pointer 407 - 1; Fig. 4.2(c)). Subsequently, the backup version of the first video stream is stopped at the next upcoming frame boundary ("Stop" (S), write pointer 406 - 2, Figure 4.2 (d) and at the next frame boundary 403 the main version of the second video stream is enabled ("enable" (E), write pointer 407 - 1, Figure 4.2(e)). At this moment the switch between the first and the second video stream takes place. Since the backup version of the first video stream is no longer needed, it is terminated ("break" (B), 406 - 2, Figure 4.1(f)). Then, the transmission of the backup version of the second video stream is established ("make" (M), write pointer 407 - 2, Figure 4.2(g)).

Between the situation shown in Figure 4.2 (b) and Figure 4.2 (g) the transmission of the first and second video streams is not - 7 compliant because during this time period only one version of the video streams are available The non - 7 compliant period Is illustrated in Figure 4.2 also by a horizontal box 409. The time duration of the non - 7 compliant period in Figure 4.1 and 4.2 is the same, and, hence, it plays no role whether the main or the backup version of a video stream is stopped first.

It is noted that the proposed method for switching between two different content streams is media agnostic, i.e. the method works regardless of the type of media contained in the packets of the streams. The content can be video or audio or any other type of data.

Individual components or functionalities of the present invention are described in the embodiment examples as software or hardware solutions. However, this does not mean that a functionality described as a software solution cannot also be implemented in hard-ware and vice versa. Similarly, mixed solutions are also conceivable for a person skilled in the art, in which components and functionalities are simultaneously partially realized in software and hardware.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

| | | | |
|---|---|---|---|
| 100 | processing device | 301 | Horizontal bar (first video stream) |
| 101,102 | Network | 302, 303 | Half bar (first video stream) |
| 103,104 | Input | 306 | Horizontal bar (second video stream) |
| 106 | MADI link | 307, 308 | Half bar (second video stream) |
| 107 | MADI input | | |
| 108 | Packet selector | 401 | Column |
| 109 | Input multiplexer | 402 | Video frame |
| | | 403 | Frame boundary |
| 111-113 | Processors | 404 | Timeline |
| 114 | Output multiplexer | | |
| 116,117 | Output | 406-1 | Write pointer first video stream (main) |
| 118,119 | Network | 406-2 | Write pointer first video stream (backup) |
| | | 407-1 | Write pointer second video stream (main) |
| 121 | Audio processor | 407-2 | Write pointer second video stream (backup) |
| 122 | MADI output | 408 | Read pointer |
| 123 | MADI link | 409 | Non-- 7 compliant zone |
| 201 | Timeline | | |
| 202 | Frame boundary | | |
| 203 | Horizontal bar (first video stream) | | |
| 204 | Horizontal bar (second video stream) | | |
| 206, 207 | Half bar (first video stream) | | |
| 208, 209 | Half bar (second video stream) | | |

## Claims

1. Method for switching between different content streams to be ingested, processed, and delivered as output stream by a media data processing device (100), wherein each content stream (301,306) is a SMPTE 2022-7 compliant content stream comprising two identical video streams as main and backup video streams (302,303,307;308) with identical IP packets, wherein the method comprises
- discontinuing transmission of one of the main and backup video streams (302,303) of a currently ingested first content stream (301),
- enabling transmission of one of the main and backup video streams (307,308) of a second content stream (306),
- switching from the currently ingested first content stream (301) to the second content stream (306) for processing,
- discontinuing transmission of the other one of the main and backup video streams (302,303) of the first content stream (301), and
- enabling transmission of the other one of the main and backup video streams (307,308) of the second video stream (306).

2. Method according to claim 1, wherein the switching from the currently ingested first content stream (301) to the second content stream (306) for processing is executed upon reception of the next IP packet of the second content stream.

3. Method according to claim 1 or 2, wherein the backup video stream (303) is discontinued prior to discontinuing the main video stream (302) of the first content stream (301).

4. Method according to one of the preceding claims, wherein the backup video stream (308) is enabled prior to enabling the main video stream (307) of the second content stream (306).

5. Method according to one of the preceding claims, wherein the output stream is delivered as a SMPTE 2022-7 compliant content stream.

6. Media data processing device (100) for switching between different content streams to be ingested, processed, and delivered as output stream, wherein each content stream (301,306) is a SMPTE 2022-7 compliant content stream comprising two identical video streams as main and backup video streams (302,303;307,308) with identical IP packets, wherein the media data processing device (100) is configured to
- discontinue transmission of one of the main and backup video streams (302,303) of a currently ingested first content stream (301),
- enable transmission of one of the main and backup video streams (307,308) of a second content stream (306),
- switch from the currently ingested first content stream (301) to the second content stream (306) for processing,
- discontinue transmission of the other one of the main and backup video streams (302,303) of the first content stream(301), and
- enable transmission of the other one of the main and backup video streams (307,308) of the second video stream (306).

7. Broadcast production system comprising one or several media data processing devices (100) according to claim 6.

## Patentansprüche

1. Verfahren zum Umschalten zwischen verschiedenen Inhaltsströmen, die von einer Mediendatenverarbeitungsvorrichtung (100) aufgenommen, verarbeitet und als Ausgangsstrom ausgegeben werden sollen, wobei jeder Inhaltsstrom (301, 306) ein SMPTE 2022-7-konformer Inhaltsstrom ist, der zwei identische Videoströme als Haupt- und Backup-Videostrom (302, 303, 307; 308) mit identischen IP-Paketen umfasst, wobei das Verfahren umfasst
- Unterbrechen der Übertragung des Haupt- oder Backup-Videostroms (302, 303) eines aktuell aufgenommenen ersten Inhaltsstroms (301),
- Aktivieren der Übertragung des Haupt- oder Backup-Videostroms (307, 308) eines zweiten Inhaltsstroms (306),
- Umschalten von dem aktuell aufgenommenen ersten Inhaltsstrom (301) auf den zweiten Inhaltsstrom (306) zur Verarbeitung,
- Unterbrechen der Übertragung des jeweils anderen Haupt- oder Backup-Videostroms (302, 303) des ersten Inhaltsstroms (301) und
- Aktivieren der Übertragung des jeweils anderen Haupt- oder Backup-Videostroms (307, 308) des zweiten Videostroms (306).

2. Verfahren nach Anspruch 1, wobei das Umschalten von dem aktuell aufgenommenen ersten Inhaltsstrom (301) auf den zweiten Inhaltsstrom (306) zur Verarbeitung beim Empfang des nächsten IP-Pakets des zweiten Inhaltsstroms ausgeführt wird.

3. Verfahren nach Anspruch 1 oder 2, wobei der Backup-Videostrom (303) vor dem Unterbrechen des Hauptvideostroms (302) des ersten Inhaltsstroms (301) unterbrochen wird.

4. Verfahren nach einem der vorstehenden Ansprüche, wobei der Backup-Videostrom (308) vor dem Aktivieren des Hauptvideostroms (307) des zweiten Inhaltsstroms (306) aktiviert wird.

5. Verfahren nach einem der vorstehenden Ansprüche, wobei der Ausgangsstrom als SMPTE 2022-7-konformer Inhaltsstrom ausgegeben wird.

6. Mediendatenverarbeitungsvorrichtung (100) zum Umschalten zwischen verschiedenen Inhaltsströmen, die aufgenommen, verarbeitet und als Ausgangsstrom ausgegeben werden sollen, wobei jeder Inhaltsstrom (301, 306) ein SMPTE 2022-7-konformer Inhaltsstrom ist, der zwei identische Videoströme als Haupt- und Backup-Videoströme (302, 303; 307, 308) mit identischen IP-Paketen umfasst, wobei die Mediendatenverarbeitungsvorrichtung (100) so konfiguriert ist, dass sie
- die Übertragung des Haupt- oder Backup-Videostroms (302, 303) eines aktuell aufgenommenen ersten Inhaltsstroms (301) unterbricht,
- die Übertragung des Haupt- oder Backup-Videostroms (307, 308) eines zweiten Inhaltsstroms (306) aktiviert,
- für die Verarbeitung von dem aktuell aufgenommenen ersten Inhaltsstrom (301) auf den zweiten Inhaltsstrom (306) umschaltet,
- die Übertragung des jeweils anderen Haupt- und Backup-Videostroms (302, 303) des ersten Inhaltsstroms (301) unterbricht und
- die Übertragung des jeweils anderen Haupt- oder Backup-Videostroms (307, 308) des zweiten Inhaltsstroms (306) aktiviert.

7. Rundfunkproduktionssystem, das eine oder mehrere Mediendatenverarbeitungsvorrichtungen (100) gemäß Anspruch 6 umfasst.

## Revendications

1. Procédé de commutation entre différents flux de contenu destinés à être acquis, traités et émis sous forme de flux de sortie par un dispositif de traitement de données multimédia (100), chaque flux de contenu (301, 306) étant un flux de contenu conforme à la norme SMPTE 2022-7 et comprenant deux flux vidéo identiques, à savoir un flux vidéo principal et un flux vidéo de secours (302, 303, 307 ; 308) comportant des paquets IP identiques, le procédé comprenant
- l'interruption de la transmission de l'un des flux vidéo, principal ou de secours (302, 303), d'un premier flux de contenu (301) en cours d'acquisition,
- l'activation de la transmission de l'un des flux vidéo, principal ou de secours (307, 308), d'un deuxième flux de contenu (306),
- la commutation du premier flux de contenu (301) en cours d'acquisition vers le deuxième flux de contenu (306) en vue de son traitement,
- l'interruption de la transmission de l'autre flux vidéo, principal ou de secours (302, 303), du premier flux de contenu (301) et
- l'activation de la transmission de l'autre flux vidéo, principal ou de secours (307, 308), du deuxième flux vidéo (306).

2. Procédé selon la revendication 1, dans lequel la commutation du premier flux de contenu (301) en cours d'acquisition vers le deuxième flux de contenu (306), en vue de son traitement, est effectuée à la réception du paquet IP suivant du deuxième flux de contenu.

3. Procédé selon la revendication 1 ou 2, dans lequel le flux vidéo de secours (303) est interrompu avant l'interruption du flux vidéo principal (302) du premier flux de contenu (301).

4. Procédé selon l'une des revendications précédentes, dans lequel le flux vidéo de secours (308) est activé avant l'activation du flux vidéo principal (307) du deuxième flux de contenu (306).

5. Procédé selon l'une des revendications précédentes, dans lequel le flux de sortie est émis sous la forme d'un flux de contenu conforme à la norme SMPTE 2022-7.

6. Dispositif de traitement de données multimédia (100) pour la commutation entre différents flux de contenu destinés à être acquis, traités et émis sous forme de flux de sortie, chaque flux de contenu (301, 306) étant un flux de contenu conforme à la norme SMPTE 2022-7 et comprenant deux flux vidéo identiques, à savoir un flux vidéo principal et un flux vidéo de secours (302, 303 ; 307, 308) comportant des paquets IP identiques, le dispositif de traitement de données multimédia (100) étant configuré pour
- interrompre la transmission de l'un des flux vidéo, principal ou de secours (302, 303), d'un premier flux de contenu (301) en cours d'acquisition,
- activer la transmission de l'un des flux vidéo, principal ou de secours (307, 308), d'un deuxième flux de contenu (306),
- commuter du premier flux de contenu (301) en cours d'acquisition vers le deuxième flux de contenu (306) en vue de son traitement,
- interrompre la transmission de l'autre flux vidéo, principal ou de secours (302, 303), du premier flux de contenu (301) et
- activer la transmission de l'autre flux vidéo, principal ou de secours (307, 308), du deuxième flux de contenu (306).

7. Système de production audiovisuelle comprenant un ou plusieurs dispositifs de traitement de données multimédia (100) selon la revendication 6.
